(19) Europäisches Patentamt / European Patent Office / Office européen des brevets

(11) **EP 3 516 117 B1**

(12) **FASCICULE DE BREVET EUROPEEN**

(45) Date de publication et mention de la délivrance du brevet:
**01.12.2021 Bulletin 2021/48**

(51) Int Cl.:
**E01C 11/26** *(2006.01)*    **E01C 7/18** *(2006.01)*
**F24S 20/64** *(2018.01)*    **F24T 10/10** *(2018.01)*
**F24T 10/00** *(2018.01)*

(21) Numéro de dépôt: **17780510.8**

(22) Date de dépôt: **26.09.2017**

(86) Numéro de dépôt international:
**PCT/FR2017/052586**

(87) Numéro de publication internationale:
**WO 2018/055314 (29.03.2018 Gazette 2018/13)**

(54) **PROCÉDÉ DE FABRICATION D'UN REVÊTEMENT DE VOIRIES**

VERFAHREN ZUR HERSTELLUNG EINER STRASSENOBERFLÄCHE

METHOD FOR PRODUCING A ROAD SURFACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.09.2016 FR 1659054**

(43) Date de publication de la demande:
**31.07.2019 Bulletin 2019/31**

(73) Titulaire: **Eurovia SA**
**92500 Rueil Malmaison (FR)**

(72) Inventeurs:
• **BERRADA, Kamal**
**33290 Le Pian Medoc (FR)**
• **POUTEAU, Bertrand**
**33160 Saint Medard en Jalles (FR)**

• **DROUADAINE, Ivan**
**33320 Le Taillan Médoc (FR)**
• **VERGNE, Sandrine**
**33400 Talence (FR)**

(74) Mandataire: **Regimbeau**
**20, rue de Chazelles**
**75847 Paris Cedex 17 (FR)**

(56) Documents cités:
**WO-A1-99/34155**    **US-A- 4 693 300**
**US-A- 5 022 459**    **US-A1- 2010 154 216**

• **D. BERTAUD ET AL: "La route durable", COTITA SUD-OUEST, 11 October 2017 (2017-10-11), pages 1-24, XP055752828, Bordeaux**

**Description**

L'invention concerne un procédé de fabrication d'un revêtement de voiries comprenant en surface un dispositif pour échangeur de chaleur visant à récupérer de l'énergie thermique des chaussées de voirie ou à restituer de l'énergie thermique à la chaussée.

Ils existent à peu près 32 millions de kilomètres de routes revêtues dans le monde. Les chaussées sont des surfaces plus ou moins planes, généralement de couleur foncée, ce qui les rend intéressantes pour cette invention : leurs propriétés thermiques font qu'elles sont capables d'emmagasiner des quantités notables d'énergie thermique pendant la journée, grâce à l'ensoleillement reçu. Dans un contexte mondial de développement des énergies renouvelables, il semble tout à fait judicieux d'essayer de récupérer cette énergie gratuite captée par les chaussées.

Parmi les différents matériaux utilisés pour la construction des chaussées, en particulier l'asphalte coulé, les enrobés bitumineux, le béton, le macadam ou le sable, les enrobés bitumineux sont un des matériaux qui monte le plus en température au cours de la journée à cause de sa réflectivité moindre et de sa conductivité thermique modérée.

On connait déjà l'utilisation des chaussées comme collecteurs thermiques pour de multiples emplois : refroidissement des chaussées pour éviter la déformation permanente susceptible d'apparaître en été, récupération de la chaleur emmagasinée pour apporter de l'énergie à des bâtiments adjacents.

On connaît également l'emploi de la géothermie pour réchauffer la chaussée, en particulier pour déneiger les routes en hiver (chaussées chauffantes).

Le document DE 20 2004 006 198 U décrit un système pour la récupération de l'énergie thermique des chaussées dans lequel des tuyaux sont installés sous la route. Ce système nécessite une couche de protection des tuyaux qui impacte la performance énergétique. En effet, les tuyaux sont éloignés de la couche de roulement, qui constitue le collecteur thermique.

La demande de brevet WO99/34155 décrit un système pour la récupération de l'énergie thermique des chaussées dans lequel des tuyaux sont intégrés dans des enrobés bitumineux poreux chaud (110-160°C). Cette demande enseigne que les enrobés bitumineux doivent être poreux, voire très poreux, pour permettre l'intégration des tuyaux. Une couche adhésive est prévue pour combler les espaces vides entre les tuyaux et l'asphalte poreux. Les tuyaux doivent être refroidis, par mise en circulation d'un agent refroidissant sous pression, pendant l'intégration et les phases de passage des machines de chantier. Le refroidissement des tuyaux et leur mise sous pression permet de les protéger thermiquement, mécaniquement et surtout d'éviter un retrait thermique lors de la pose des tuyaux dans un enrobé encore chaud. En outre, il convient également de contrôler l'angle des tuyaux avec l'axe des rouleaux du compacteur.

En chantier, il est coûteux et problématique d'avoir à refroidir et/ou mettre sous pression les tuyaux lors de la pose.

En outre, la couche adhésive, nécessaire pour combler les espaces vides, est défavorable aux propriétés mécaniques de l'enrobé.

Enfin, selon ce procédé, des moyens particuliers, coûteux, doivent être mis en œuvre lors du passage subséquent des chenilles des finisseurs ou autres machines de chantier.

L'invention vise à résoudre ces problèmes en proposant un procédé de fabrication d'un revêtement de voiries comprenant les tuyaux d'un échangeur de chaleur :

- Permettant d'indenter des tuyaux avec la géométrie retenue, quel que soit la courbure des tuyaux et pouvant ainsi comprendre des virages, des boucles, ...
- Ne laissant pas d'espaces vides entre les tuyaux et la couche les intégrant, ne nécessitant ainsi pas l'ajout d'une couche adhésive pour combler des espaces vides et/ou de produit de comblement ;
- Ne nécessitant pas de refroidissement des tuyaux par mise en circulation d'un agent refroidissant, pendant la pose et/ou l'indentation et/ou les étapes subséquentes de fabrication du revêtement de voiries y compris lors du passage des machines de chantier ;
- Ne nécessitant pas une mise sous pression des tuyaux pendant la pose et/ou l'indentation et/ou les étapes subséquentes de fabrication du revêtement de voiries y compris lors du passage des machines de chantier ;
- Ne nécessitant pas un contrôle de l'angle des tuyaux avec l'axe du rouleau compacteur ;
- Economique, de mise en œuvre aisée, permettant

  ◦ l'installation à haute cadence d'un échangeur de chaleur
  ◦ de préparer un revêtement de voirie pouvant supporter tout trafic, y compris un fort trafic

Le procédé selon l'invention permet également un échange thermique optimisé, notamment en minimisant la quantité de vide autour des tuyaux de l'échangeur de chaleur.

Enfin, avantageusement, par le procédé selon l'invention, la présence du dispositif pour l'échangeur de chaleur ne limite pas le recyclage du revêtement de voirie.

Selon la norme NF P 98-149, juin 2002, on entend :

- par « recyclage », l'introduction, dans un cycle de fabrication d'enrobés à chaud ou tièdes, d'une proportion donnée d'enrobés de récupération (enrobés recyclés). Le recyclage peut être réalisé en centrale ou en place. Dans ce dernier cas, il peut être réalisé, soit par thermorecyclage, soit par fraisage à froid, malaxage à chaud des agrégats (fraisats) dans un matériel automoteur, et remise en place.
- par « thermorecyclage », recyclage en place par chauffage, fractionnement, malaxage de l'enrobé ancien avec les correctifs nécessaires (enrobé, granulats et liant de régénération) et remise en œuvre du mélange obtenu
- par « fraisage », une opération de désagrégation et d'enlèvement de matériaux liés à l'aide d'un tambour rotatif équipé d'outils adaptés (dents, pics, couteaux).

Ces problèmes techniques sont résolus en intégrant des tuyaux particuliers dans des enrobés hydrocarbonés particuliers par le procédé selon l'invention.

La présente invention a ainsi pour objet un procédé de fabrication d'un revêtement de voiries comprenant en surface des tuyaux d'un dispositif pour échangeur de chaleur, caractérisé en ce qu'il comprend les étapes suivantes :

a) répandage à une température inférieure à 160°C d'enrobés hydrocarbonés, comprenant une fraction granulaire, un liant hydrocarboné, lesdits enrobés hydrocarbonés étant maniables, ayant une maniabilité, mesurée avec un maniabilimètre Nynas à la température de mise en œuvre des enrobés hydrocarbonés, inférieure à 400N, puis

b) dépôt de tuyaux, lesdits tuyaux ayant une résistance à l'écrasement supérieure à 3000 N par mètre linéaire de tuyaux à 100°C, une dilatation thermique inférieure à $200.10^{-6}$ $K^{-1}$ à 20°C de sorte à permettre leur indentation même en l'absence de moyen de refroidissement, puis

c) indentation des tuyaux déposés dans ladite couche d'intégration par compactage desdits enrobés pendant la durée de maniabilité desdits enrobés, pour former une couche d'intégration comprenant des tuyaux d'un dispositif pour échangeur de chaleur, puis

d) application au-dessus d'une couche de surface pour revêtement de voirie, en particulier une couche de roulement.

**Enrobés hydrocarbonés**

Un enrobé hydrocarboné est un mélange d'une fraction granulaire, comprenant des granulats et du sable, et de liant hydrocarboné appliqué en une ou plusieurs couches pour constituer la chaussée des routes.

Les enrobés hydrocarbonés à chaud sont fabriqués à chaud (généralement de 130°C à 170°C) et appliqués à chaud (généralement de 110°C à 160°C).

L'enrobé tiède rencontre toutes les spécifications de l'enrobé à chaud, mais il est produit et mis en œuvre à une température inférieure de 30°C à 60°C par rapport à l'enrobé à chaud. Ainsi, les enrobés hydrocarbonés tièdes sont fabriqués à des températures allant de 100°C à 140°C et appliqués à des températures allant de 80°C à 130 °C.

Les enrobés hydrocarbonés à chaud ou tièdes sont déposés par répandage, par exemple avec un finisseur ou une niveleuse, puis compactés.

Des enrobés hydrocarbonés ont spécialement été développés pour une mise en œuvre optimisée du procédé selon l'invention.

Avantageusement, les éléments de la fraction granulaire des enrobés hydrocarbonés ont des dimensions comprises entre 0 mm et 20 mm, avantageusement entre 0 mm et 14 mm, plus avantageusement entre 0 mm et 10 mm, encore plus avantageusement entre 0 mm et 6 mm.

Par "fractions solides minérales", on entend ici toutes fractions solides utilisables pour la réalisation d'enrobés hydrocarbonés notamment pour la construction routière, comprenant notamment les granulats minéraux naturels (gravillons, sable, fines) issus de carrière ou de gravière, les produits de recyclage tel que les agrégats d'enrobés résultant du recyclage des matériaux récupérés lors de la réfection des routes ainsi que des surplus de centrales d'enrobage, les rebuts de fabrication, les granulats provenant du recyclage de matériaux routiers y compris les bétons, les laitiers en particulier les scories, les schistes en particulier la bauxite ou le corindon, les poudrettes de caoutchouc provenant du recyclage des pneus notamment, les granulats artificiels de toute origine et provenant par exemple de mâchefers d'incinération des ordures ménagères (MIDN), ainsi que leurs mélanges en toutes proportions.

Dans le cadre de l'invention, la fraction granulaire comprend avantageusement :

- des éléments inférieurs à 0,063 mm (filler ou fines)
- du sable dont les éléments sont compris entre 0,063 mm et 2 mm ;
- des éléments, en particulier des gravillons, ayant des dimensions

o comprises entre 2 mm et 6 mm ;

○ éventuellement, comprises entre 6 mm et 10 mm;

○ éventuellement, comprises entre 10 mm et 14 mm ;

○ éventuellement, comprises entre 14 mm et 20 mm.

En particulier, la fraction granulaire comprend avantageusement :

- des éléments inférieurs à 0,063 mm (filler ou fines)
- du sable dont les éléments sont compris entre 0,063 mm et 2 mm ;
- des éléments, en particulier des gravillons, ayant des dimensions

○ comprises entre 2 mm et 6 mm ;

○ éventuellement, comprises entre 6 mm et 10 mm.

Avantageusement une faible granulométrie (en particulier 0/10, avantageusement 0/6) permet d'améliorer le contact entre les tuyaux et l'enrobé hydrocarboné.

La taille des granulats minéraux est mesurée par les essais décrits dans la norme NF EN 933-2 (version mai 1996).

Par « fines minérales » ou « filler », on entend toute charge minérale ou siliceuse, passant à travers un tamis à maille carrée de 0,063 mm de côté. Les fines peuvent être des fines naturelles ou d'apport, par exemple des fines calcaires (carbonate de calcium), du ciment ou de la chaux hydratée, ou de récupération.

On entend par « agrégats d'enrobés » des enrobés (mélange de granulats et de liants bitumineux) provenant de fraisage de couches d'enrobé, de concassage de plaques extraites de chaussées en enrobés, de morceaux de plaques d'enrobés, de déchets d'enrobés ou de surplus de productions d'enrobés (les surplus de productions sont des matériaux enrobés ou partiellement enrobés en centrale résultant des phases transitoires de fabrication).

Dans la fraction granulaire, la teneur en fines (éléments ayant une taille inférieure ou égale à à 0,063 mm), varie avantageusement de 4% à 15% en volume, par rapport au volume total de la fraction granulaire.

Dans la fraction granulaire, la teneur en éléments ayant une taille supérieure à 0,063 mm et inférieure ou égale à 2 mm, en particulier du sable, varie avantageusement de 15% à 80% en volume, par rapport au volume total de la fraction granulaire.

Dans la fraction granulaire, la teneur en éléments ayant une taille supérieure à 2 mm, avantageusement jusqu'à 6 mm, varie de 5% à 81% en volume, par rapport au volume total de la fraction granulaire.

La conductivité thermique, $\lambda$, des enrobés hydrocarbonés peut être supérieure ou égale à 1 W/m.K, avantageusement supérieure ou égale à 1,4 W/m.K, plus avantageusement supérieure ou égale à 2 W/m.K. La conductivité thermique sera généralement inférieure à 10 W/m.K.

L'absence de vide significatif autour des tuyaux permet un bon contact thermique. On cherche à maximiser la conductivité de la couche d'intégration lorsque l'on souhaite capter l'énergie.

Cependant, pour certaines applications, telles que le déneigement de chaussées, on peut chercher à orienter au maximum l'énergie transportée par le fluide caloporteur, circulant dans les tuyaux, vers la surface. On recherchera alors une couche d'intégration isolante pour minimiser toute déperdition de chaleur ailleurs que vers la surface.

Une telle couche isolante peut être obtenue en utilisant des granulats particuliers.

Ainsi, dans une autre variante de l'invention, la conductivité thermique, $\lambda$, des enrobés hydrocarbonés est inférieure à 1 W/m.K, avantageusement elle est inférieure à 0,8 W/m.K, plus avantageusement inférieure ou égale à 0,7 W/m.K. La conductivité thermique sera généralement supérieure à 0,033 W/m.K.

Dans cette variante, la fraction granulaire des enrobés hydrocarbonés comprend avantageusement des éléments choisis parmi des granulats légers de masse volumique inférieure à 2,6 t/m$^3$, avantageusement de masse volumique inférieure à 1,6 t/m$^3$.

Avantageusement, tout ou partie des granulats légers sont des granulats légers non absorbants ayant un coefficient d'absorption d'eau inférieur à 15%. Avantageusement, les granulats légers et non absorbants ont avantageusement une masse volumique comprise entre 1,1 t/m$^3$ et 1,5 t/m$^3$.

En plus d'être légers, les granulats sont avantageusement non absorbants. La propriété de « non absorbant » se caractérise par la mesure du coefficient d'absorption d'eau. Au sens de la présente invention, un granulat non absorbant est un granulat qui a un coefficient d'absorption d'eau inférieur à 15%, avantageusement compris entre 3% et 15%, plus avantageusement compris entre 6% et 13%.

Le coefficient d'absorption d'eau se mesure selon le protocole normalisé décrit dans la norme NF EN 1097-6 (version juin 2001 complété par la version de février 2006). Le « coefficient d'absorption d'eau » est le rapport de l'augmentation de masse d'un échantillon de granulats à sa masse sèche, après passage à l'étuve, du fait de la pénétration de l'eau dans les pores accessibles à l'eau. On calcule le coefficient d'absorption d'eau (en pourcentage de la masse sèche) (*WA*24) conformément à l'équation suivante :

$$WA24 = \frac{100 \times (M1 - M4)}{M4}$$

où :

M1 est la masse des granulats saturés et superficiellement secs dans l'air, en grammes ;

M4 est la masse de la prise d'essai séchée à l'étuve dans l'air, en grammes ;

Les masses M1 et M4 sont mesurées selon le protocole suivant. Les granulats sont immergés dans de l'eau (température ambiante, en particulier 22 ± 3°C) pendant un temps suffisant (avantageusement 24 heures). Les granulats sont ensuite récupérés, séchés au chiffon, étalés en couche mono-granulaire et laissés exposés à l'air libre mais à l'abri des rayons du soleil ou de toute autre source de chaleur jusqu'à ce que les films d'eau visibles aient disparu. On pèse les granulats (M1). Ensuite, on transfère les granulats sur un plateau et on les place dans l'étuve à une température de (110 ± 5) °C jusqu'à masse constante (M4).

Le coefficient d'absorption d'eau est mesuré par la méthode au pycnomètre (les granulats sont chargés dans un pycnomètre rempli d'eau).

Ces granulats légers et non absorbants présentent par ailleurs une bonne résistance mécanique.

Ces granulats ont avantageusement un pourcentage de vide supérieur à 50%, les pores étant majoritairement des pores fermés. Ainsi, avantageusement plus de 90% en nombre des pores sont des pores fermés, avantageusement plus de 95%, et jusqu'à 100% des pores sont des pores fermés. Ces pores fermés permettent d'assurer que le liant n'est pas absorbé par les granulats. Ainsi, les propriétés de l'enrobé n'évoluent pas plus que celles d'un enrobé classique. Le pourcentage de vide est avantageusement supérieur à 60%, plus avantageusement compris entre 65% et 80%, encore plus avantageusement compris entre 65% et 75%. Le pourcentage en vide peut être déterminé par la méthode géométrique, telle que celle décrite dans la norme NF EN 12697-6 d'août 2012, ou par une méthode gamma densimétrie, telle que celle décrite dans la norme NF EN 12697-7 de juin 2003.

Ces granulats légers et non absorbants sont avantageusement de l'ardoise expansée, en particulier de l'ardoise expansée de Mayenne. Plus avantageusement, ces granulats sont les granulats commercialisés par la société Granulats Expansés de la Mayenne sous la marque Granulex®.

Les enrobés comprennent un liant. Le liant est ce qui permet de coller les granulats entre eux et d'assurer une bonne tenue mécanique de la chaussée. Un liant peut être bitumineux ou végétal ou de synthèse. Le liant peut également être un mélange de liants issus de ces différentes origines.

On entend par « liant », un liant hydrocarboné, avantageusement d'origine fossile, ou tout liant d'origine végétale ou synthétique, utilisable pour la réalisation d'un enrobé hydrocarboné. Avantageusement, il s'agit de toute composition contenant du bitume, éventuellement un additif de maniabilité et éventuellement un ou plusieurs additifs et/ou un ou plusieurs émulsifiants et/ou un ou plusieurs viscosifiants et/ou un ou plusieurs fluxants et/ou un ou plusieurs plastifiants et/ou tout autre additif permettant d'en ajuster les propriétés, comme par exemple l'adhésivité. À titre d'exemple, on citera les bitumes, les bitumes modifiés par des élastomères et/ou des plastomères.

Le liant peut être de tout grade. Le liant peut être un liant dur ou mou.

Dans une variante avantageuse de l'invention, on utilisera les liants routiers répondant aux normes NF EN 12591 (2009, bitumes purs) ou NF EN 13924 (2006, bitumes durs) ou NF EN 14023 (2010, bitume modifié par des polymères).

Avantageusement, le liant est de grade 35/50

Avantageusement, le liant comprend également un polymère.

Le « polymère » modifiant le liant auquel il est fait référence ici, peut être choisi parmi les polymères naturels ou synthétiques. Il s'agit par exemple d'un polymère de la famille des élastomères, synthétiques ou naturels, et de manière indicative et non limitative :

- les copolymères statistiques, multi-séquencés ou en étoile, de styrène et de butadiène ou d'isoprène en toutes proportions (en particulier copolymères blocs de styrène-butadiène-styrène (SBS), de styrène-butadiène (SB, SBR pour styrène-butadiène rubber), de styrène-isoprène-styrène (SIS)) ou les copolymères de même famille chimique (isoprène, caoutchouc naturel, ...), éventuellement réticulés in-situ,

- les copolymères d'acétate de vinyle et d'éthylène en toutes proportions,

- les copolymères de l'éthylène et d'esters de l'acide acrylique, méthacrylique ou de l'anhydride maléique, les copolymères et terpolymères d'éthylène et de méthacrylate de glycidyle-) et les polyoléfines, en particulier le polyéthylène.

Le polymère est avantageusement choisi parmi les copolymères statistiques, multi-séquencés ou en étoile, de styrène et de butadiène ou d'isoprène, les copolymères d'acétate de vinyle et d'éthylène et le polyéthylène.

Le polymère modifiant le bitume peut être choisi parmi les polymères de récupération, par exemple des « poudrettes de caoutchouc » ou autres compositions à base de caoutchouc réduits en morceaux ou en poudre, par exemple obtenues à partir de pneus usagés ou d'autres déchets à base de polymères (câbles, emballage, agricoles, ...) ou encore tout autre polymère couramment utilisé pour la modification des bitumes tels que ceux cités dans le Guide Technique écrit par l'Association Internationale de la Route (AIPCR) et édité par le Laboratoire Central des Ponts et Chaussées "Use of Modified Bituminous Binders, Special Bitumens and Bitumens with Additives in Road Pavements" (Paris, LCPC, 1999), ainsi que tout mélange en toute proportion de ces polymères.

Dans le cas de polymère de récupération, en particulier de déchet, pratiquement il pourra être ajouté lors de l'enrobage, par exemple avec la fraction minérale solide.

La teneur en polymère dans le liant varie avantageusement de 2% à 20% en poids, plus avantageusement de 2% à 10% en poids, encore plus avantageusement de 4% à 8% en poids, par rapport au poids total du liant.

Dans les enrobés selon l'invention, la teneur en liant varie avantageusement de 7,5% à 24% en volume, par au volume total de l'enrobé, plus avantageusement de 11% à 23% en volume.

Les enrobés hydrocarbonés selon l'invention sont déposés par répandage, par exemple avec un finisseur ou une niveleuse, puis compactés. Ce compactage permet de réduire la teneur en vides (V), inférieure, après mise en œuvre et refroidissement, à 15%, plus avantageusement inférieure à 10% (cf. norme NF EN 12697-5, -6, -8 de 2012).

Les enrobés hydrocarbonés utilisés dans le procédé selon l'invention sont maniables. Des enrobés hydrocarbonés particulièrement adaptés ont une maniabilité, mesurée avec un maniabilimètre Nynas à la température de mise en œuvre des enrobés hydrocarbonés, inférieure à 400N, avantageusement inférieure à 350 N, plus avantageusement inférieure à 300 N, encore plus avantageusement inférieure à 250 N. La maniabilité est généralement supérieure à 50 N à la température de mise en œuvre des enrobés hydrocarbonés.

Les enrobés hydrocarbonés utilisés dans le procédé selon l'invention sont également, avantageusement, compacts.

Afin de garantir un bon contact et ainsi permettre un couplage thermique suffisant entre l'enrobé et le tuyau, la compacité de la formule d'enrobé mesurée au moyen d'une presse à cisaillement giratoire à 60 girations, selon la norme NF EN 12697-31 d'août 2007 est avantageusement supérieure à 90%, plus avantageusement supérieure à 93%. La compacité peut aller jusqu'à 99,9%.

On rappelle que C+V=100.

Diverses méthodes peuvent être mises en œuvre, isolement ou conjointement, pour améliorer la maniabilité de l'enrobé.

Dans une première méthode, on peut ajouter au liant un additif de maniabilité.

Cet additif de maniabilité peut être un additif présentant une température de fusion supérieure à 60 °C et inférieure à 130°C. Un tel additif présente une température de fusion supérieure à 60 °C, avantageusement supérieure à 80°C. Un tel additif a une température de fusion inférieure à 130°C, avantageusement inférieure à 120°C. Un tel additif permet de conférer de la maniabilité aux enrobés hydrocarbonés.

Cet additif permet de réduire la viscosité du liant pour abaisser la température de fabrication et de mise en œuvre des enrobés hydrocarbonés tout en conservant les propriétés mécaniques requises, améliorer la maniabilité, améliorer la compacité.

En particulier, un tel additif est au moins un triglycéride d'acides gras, ledit acide gras étant choisi dans le groupe constitué par les acides gras saturés, comprenant de 12 à 30 atomes de carbone, avantageusement de 12 à 20 atomes de carbone, et pouvant être substitués par au moins une fonction hydroxyle ou par un radical alkyle en $C_1$-$C_4$. Un acide gras saturé ne comporte pas d'insaturations (double ou triple liaison carbone carbone). En particulier, l'acide gras est choisi dans le groupe constitué par les acides gras saturés comprenant de 12 à 30 atomes de carbone, éventuellement substitués par au moins une fonction hydroxyle ou par un radical alkyle en $C_1$-$C_4$, en particulier l'acide gras est choisi dans le groupe constitué par l'acide 12-hydroxy-octadécanoïque, l'acide hexadécanoïque, l'acide octadécanoïque, l'acide 9,10-dihydroxy-octadécanoïque, l'acide icosanoïque, l'acide nonadécanoïque, et leurs mélanges.

L'additif de maniabilité est avantageusement un triglycéride d'acides gras, l'acide gras étant avantageusement choisi dans le groupe défini précédemment. En particulier, l'additif comprend au moins un triglycéride dont une molécule d'acide gras est constituée de l'acide 12-hydroxy-octadécanoïque. Un tel additif est par exemple décrit dans la demande EP 2 062 941.

La teneur en additif sera avantageusement comprise entre 1% et 6% en masse par rapport à la masse totale en liant.

D'autres additifs de maniabilité sont également connus.

Comme autre additif, on peut également citer des cires d'origines animale, végétale ou d'hydrocarbures, en particulier des cires hydrocarbonées à chaîne longue (plus de 30 atomes de carbone). En particulier, on peut citer les cires hydrocarbonées à base de polyéthylène ou également de cire hydrocarbonée obtenue par la synthèse de Fischer Tropsch (telle que la cire Fischer Tropsch commercialisée sous le nom commercial Sasobit® par la société Sasol), de poids moléculaire supérieur à 400 g/mol et inférieur à 6 000 g/mol. De telles cires sont par exemple décrites dans les brevets US 6588974, FR 2 855 523, EP 1 017 760, EP 690 102.

Comme autre additif, on peut également introduire un dérivé d'acide gras choisi dans le groupe constitué par les diesters d'acide gras, les éthers d'acide gras, les cires d'amides, les cires de diamide et leurs mélanges.

Le liant, selon cette variante, contient avantageusement 1 à 6% en masse de ladite cire par rapport à la masse totale du liant.

Comme additif de maniabilité, on peut également introduire une résine naturelle, éventuellement modifiée, d'origine végétale.

La majorité des résines naturelles ou naturelles modifiées d'origine végétale n'ont pas de point de fusion déterminé mais présentent une zone de ramollissement. La résine présente avantageusement un point de ramollissement inférieur à 130°C, encore plus avantageusement inférieur à 120°C et en outre avantageusement supérieur à 65°C.

Le liant contient avantageusement 1 à 6% en masse de ladite résine d'origine végétale par rapport à la masse totale du liant.

La résine d'origine végétale est avantageusement choisie dans le groupe constitué par les colophanes naturelles ou naturelles modifiées, les esters de colophane, les savons de colophane, les terpènes, le tall oil, le dammar, les résines accroïdes. La résine d'origine végétale est plus particulièrement une résine de colophane, par exemple le glycérol ester de colophane maléique. On peut par exemple citer les additifs décrits dans les brevets FR 2 945 818, FR 2 965 271.

On peut également citer les additifs décrits dans les brevets EP 2 062 943, FR 2 939 143, FR 2 901 279.

L'additif de maniabilité peut ne pas avoir de point de fusion / changement d'état dans la plage de température d'intérêt. Par exemple, on peut introduire un fluxant, également appelé huile de fluxage, à base de matières grasses animales et/ou végétales (huiles et graisses). L'huile de fluxage peut être une huile végétale, un résidu de distillation d'une huile végétale, l'un de ses dérivés tels que sa partie acide gras, un mélange d'acides gras, un produit de transestérification (par un alcanol en C1-C6) tel qu'un ester méthylique de l'huile végétale ou un dérivé de résine alkyde de l'huile végétale. L'huile végétale comprend des chaînes grasses insaturées. De telles huiles sont par exemple décrites dans les brevets FR 2 910 477, EP 900 822, FR 2 721 043, FR 2 891 838.

On pourra également utilisant des fluxants tels que ceux décrits dans les brevets WO2006/070104, WO 2011/151387 et FR3054568.

On peut également envisager des additifs diminuant les tensions superficielles à l'interface liant/granulat (meilleure mouillabilité).

On peut par exemple utiliser les additifs décrits dans les demandes de brevet FR 2 883 882, EP 1 716 207, EP 1 915 420.

Des polymères superabsorbants, tels que ceux décrits dans la demande FR 2 950 893, pourraient également être utilisés.

Des enrobés hydrocarbonés maniables peuvent également être obtenus sans ajout d'additif de maniabilité.

Ainsi, le liant peut être expansé en mousse par emploi d'eau. L'eau peut être l'eau résiduelle des granulats ou d'additifs qui se vaporise au contact de granulats et de liant chauds pour faire mousser le liant sans pression.

Un exemple d'additif est une zéolithe, naturelle et/ou synthétique, ou sa phase de synthèse initiale amorphe, telle que décrite par exemple dans la demande de brevet WO2004/016565.

La zéolithe est capable de libérer sous l'action de la chaleur (c'est-à-dire à une température supérieure à 110 °C) des molécules d'eau qui se trouvent entre les couches ou les interstices de son réseau cristallin. La zéolithe utilisée est avantageusement une zéolithe synthétique du type A, P, X et/ou Y. De préférence, on utilisera un granulé de zéolithe de type A, notamment de la formule brute $Na_{12}(AlO_2)_{12}(SiO_2)_{12}$, 27 $H_2O$ où $Na_2O$ est de 18 %, $Al_2O_3$ de 28 %, $SiO_2$ de 33 % et $H_2O$ de 21 %.

On peut également fabriquer une mousse par introduction dans le liant d'air et d'eau sous pression.

Un autre moyen est de séquencer l'enrobage, tel que cela est par exemple décrit dans les brevets EP0 384 094, EP 0524031, EP 0781887, EP 0 552 574, FR 2 732 239, EP 1 668 184.

Par ailleurs, les enrobés hydrocarbonés sont avantageusement résistants à l'orniérage, plus avantageusement avec un pourcentage d'ornières après 30 000 cycles inférieur à 7,5%, avantageusement inférieur à 5%.

Le système est ainsi adapté à un trafic routier, y compris à fort trafic.

Le cas échéant, pour optimiser la résistance à l'orniérage, on utilisera avantageusement un liant additivé de polymères, tel que décrit précédemment.

Lorsque les enrobés hydrocarbonés comprennent un additif de maniabilité à changement d'état, cet additif va également permettre d'assurer une bonne résistance à l'orniérage.

On peut également ajouter de l'acide polyphosphorique, tel que par exemple décrit dans les brevets WO2007/143016, WO2011/153267, WO2006/119354, FR 2 852 018.

Les enrobés selon l'invention peuvent également comprendre un ou plusieurs additif(s). Des additifs peuvent être ajoutés soit au liant, soit au granulat, soit à l'enrobé.

Les additifs peuvent également être utilisés à des fins esthétiques, notamment pour un changement de couleur des produits routiers finaux. Il peut s'agir ainsi de pigment naturel ou non, tel que l'oxyde fer.

**Dispositif pour échangeur de chaleur** :

Le dispositif pour échangeur de chaleur comprend des tuyaux, dans lesquels au moins un fluide caloporteur va pouvoir circuler.

Les tuyaux sont avantageusement en polymère. En effet, on souhaite que la présence du dispositif dans le revêtement de voirie n'en impacte pas sa recyclabilité. Le polymère est choisi en fonction de la température d'application des enrobés hydrocarbonés. On choisit un polymère ayant une température de fusion ou de ramollissement ou de transition vitreuse supérieure à la température d'application des enrobés hydrocarbonés.

Une caractéristique importante de ces tuyaux est leur résistance à l'écrasement et leur dilatation thermique.

La résistance à l'écrasement est la force obtenue lorsque le tuyau est écrasé de telle manière que son diamètre extérieur est divisé par deux par rapport à son diamètre initial.

Les tuyaux ont une résistance à l'écrasement supérieure à 3000 N par mètre linéaire de tuyaux à 100°C, avantageusement supérieure à 4500 N, plus avantageusement supérieure à 10 000 N.

En particulier, les tuyaux ont une résistance à l'écrasement comprise entre 3000 N et 100 000 N, avantageusement entre 4500 N et 100 000 N, plus avantageusement entre 10 000 N et 100 000 N, par mètre linéaire de tuyaux à 100°C.

La dilatation thermique des tuyaux est avantageusement inférieure à $200.10^{-6}$ $K^{-1}$ à 20°C, plus avantageusement inférieure à $160.10^{-6}$ $K^{-1}$ à 20°C. La dilatation thermique des tuyaux est généralement supérieure à $10.10^{-6}$ $K^{-1}$ à 20°C.

On a en effet constaté, de manière surprenante, que dans les enrobés hydrocarbonés selon l'invention, lorsque les tuyaux présentent une telle résistance à l'écrasement et une telle dilatation thermique, lors du passage du compacteur, les tuyaux s'indentent sans se déformer et restent en place, même au niveau des virages. Il n'est pas nécessaire de les remplir avec un liquide de refroidissement ou un quelconque autre moyen de protection thermique et/ou mécanique et/ou de mise sous pression des tuyaux. Ceci constitue un avantage économique significatif.

Lors du chantier, les extrémités du tuyau pourront rester ouvertes sur l'extérieur et les tuyaux seront simplement remplis de l'air ambiant. On peut ainsi dire que les tuyaux sont posés à vide.

Néanmoins, la mise en circulation d'eau, avantageusement à une température inférieure à 80°C, en particulier allant de 5°C à 30°C, dans les tuyaux, pourra être envisagée lors de l'indentation, c'est-à-dire lors de l'étape c) ou après indentation et avant application de la couche subséquente, c'est-à-dire après l'étape c) et avant l'étape d).

Pour un même polymère, la rigidité des tuyaux, et ainsi la résistance à l'écrasement, pourra être augmentée en augmentant l'épaisseur de peau des tuyaux.

Avantageusement, le retrait à chaud des tuyaux, mesuré selon la norme NF EN ISO 2505, de 2005, est inférieur à 3% (en étuve, à 150°C pendant 60 mn), plus avantageusement inférieur à 2%.

Une autre caractéristique avantageuse des tuyaux est leur adhérence au liant. On considère que les tuyaux adhèrent au bitume lorsque le critère suivant est rempli : les tuyaux sont badigeonnés d'émulsion cationique de bitume 50/70 dosé à 65% en poids de bitume, lors de cette opération si l'émulsion ne perle pas à la surface l'adhérence du tuyau est suffisante.

De tels tuyaux adhèrent aux enrobés hydrocarbonés selon l'invention et s'indentent donc plus facilement lors du compactage.

A titre d'exemple de polymère adapté, on peut citer le polyéthylène haute densité, le polyéthylène haute densité réticulé, le polypropylène, les copolymères bloc éthylène-propylène.

Les tuyaux du dispositif ont avantageusement un diamètre allant de 5 mm à 30 mm. Les tuyaux du dispositif ont avantageusement une épaisseur de peau allant de 1 mm à 5 mm.

Les tuyaux sont avantageusement préalablement mis en forme à la géométrie souhaitée. Ainsi, le procédé selon l'invention comprend une étape dans laquelle on impose une géométrie aux tuyaux du dispositif pour échangeur de chaleur avant l'étape b) de dépôt.

Cette étape peut être réalisée précédemment en usine ou en atelier bord de voie.

La géométrie imposée peut être toute géométrie permettant d'optimiser les échanges thermiques de la nappe en fonctionnement, notamment en fonction des applications recherchées. Le procédé selon l'invention permet d'indenter les tuyaux quel que soit leur courbure et ainsi offre une large souplesse sur la géométrie.

D'un point de vue thermique, les échanges sont favorisés lorsque les tuyaux indentés du dispositif dessinent un motif comprenant N lignes droites parallèles sensiblement de même longueur et N-1 virages dont l'angle de courbure peut varier de 90° à 180°. L'espacement entre les droites parallèles sera avantageusement de 10 cm à 45 cm, plus avantageusement de 20 cm à 40 cm.

Avant l'étape b), les tuyaux pourront être libres ou positionnés sur un substrat.

Lorsqu'ils sont libres, leur géométrie est avantageusement imposée par mémoire de forme. Autrement, le substrat sert à maintenir la géométrie et ainsi faciliter le positionnement des tuyaux en les supportant.

Le substrat est par exemple constitué d'un géo-matériau synthétique, tel qu'un géotextile ou une géogrille, constitué de polymère, éventuellement de bitume, éventuellement de fibres minérales ou organiques, tissé ou non tissé. Le substrat est de préférence perméable à l'eau et à l'émulsion de bitume pour favoriser le collage. Les fibres peuvent en particulier être des fibres de verre.

Le substrat peut rester dans la couche d'intégration ou être enlevé après l'étape b) ou c).

Le substrat restant dans la couche d'intégration après l'indentation, il permet également de renforcer la structure de ladite couche.

Les matériaux constituant les tuyaux et le substrat permettent avantageusement un recyclage simultané des enrobés hydrocarbonés de la couche d'intégration, éventuellement des autres couches, des tuyaux et du support, lorsqu'il est présent, lorsque le revêtement de voirie est enlevé, par exemple suite à une opération de fraisage. En particulier, le dispositif pour échangeur de chaleur indenté dans ladite couche d'intégration ne comprend pas d'élément métallique.

Le dispositif est avantageusement conditionné en plaque ou en rouleau, plus avantageusement en rouleau. Le conditionnement en plaque limite les dimensions pour assurer une livraison par camion : les dimensions maximum d'une cargaison sont une longueur de 12 m pour une largeur de l'ordre de 2,60 m.

Il est de préférence conditionné en usine mais il peut être préparé en atelier bord de voie.

Le conditionnement en plaque ou en rouleau permet la pose du dispositif en même temps que la réalisation de la chaussée et permet d'assurer des cadences compatibles avec la conduite d'un chantier.

Le conditionnement en plaque ou en rouleau permet également de limiter les éléments introduits dans la chaussée afin de conserver les propriétés mécaniques de la route.

En fonctionnement, un fluide caloporteur circule dans les tuyaux du dispositif pour échangeur thermique. Le fluide caloporteur peut être de l'eau ou de l'eau glycolée pour diminuer le point de congélation et la résistance au froid. On préfère une eau glycolée non nocive de nature mono-propylène glycol, comme préconisé par la norme NF X10-970 de janvier 2011.

Des additifs, notamment des additifs fongicides et bactéricides, pourront être ajoutés au fluide caloporteur. Ainsi, on évite un traitement de surface des tuyaux, telle qu'une barrière anti-oxygène, qui pourrait être défavorable à l'adhésion.

**Description détaillée du procédé :**

Le procédé selon l'invention se caractérise en ce que des tuyaux d'un dispositif pour échangeur de chaleur sont intégrés dans une couche d'enrobés hydrocarbonés, dite couche d'intégration, par indentation. Cette couche d'intégration pourra supporter tout trafic, y compris des forts trafics.

La couche d'intégration est ensuite recouverte d'au moins une couche de revêtement de voirie :

    i. adaptée aux trafics, des faibles trafics aux forts trafics en fonction des compositions des couches de la chaussée
    ii. qui va capter l'énergie solaire (en mode récupération d'énergie) ou qui sera à réchauffer (en mode restitution d'énergie)

La voirie pourra être de large surface, ce qui fournira un échangeur thermique de grande dimension.

Pour optimiser les rendements énergétiques, la couche d'intégration est proche de la surface. En particulier, l'épaisseur combinée de la ou des couche(s) appliquée(s) par la suite sur ladite couche d'intégration est inférieure à 30 cm, avantageusement inférieure à 10 cm. Elle peut par exemple varier de 2 cm à 30 cm, avantageusement de 6 cm à 10 cm.

La couche de revêtement de voirie pourra comprendre un multicouche constitué à minima d'une couche de liaison et d'une couche de roulement.

Dans une variante, la couche de liaison a une épaisseur allant de 4 cm à 14 cm, avantageusement de 4 cm à 7 cm.

Dans une variante, la couche de roulement a une épaisseur allant de 2 cm à 10 cm, avantageusement de 5 cm à 7 cm.

Pour toutes les épaisseurs, sauf indication contraire, il s'agit de l'épaisseur après compactage.

Le procédé selon l'invention permet d'intégrer les tuyaux du dispositif pour échangeur de chaleur dans une couche d'intégration lors de la réalisation de la chaussée intégrant ladite couche d'intégration.

Les tuyaux sont indentés dans la couche d'intégration pendant la durée de mise en œuvre de l'enrobé hydrocarboné de la couche d'intégration, avant la fin du compactage. Cette durée de mise en œuvre est définie par la maniabilité de l'enrobé hydrocarboné.

Une indentation réussie dépend à la fois de la maniabilité de l'enrobé hydrocarboné et de la résistance à l'écrasement du tuyau. Plus le tuyau est résistant à l'écrasement, plus le seuil de tolérance sur la maniabilité des enrobés sera large. Plus les enrobés hydrocarbonés sont maniables, plus le seuil de tolérance sur la résistance à l'écrasement des tuyaux sera large.

Cependant, quel que soit l'enrobé maniable, le tuyau présente une résistance à l'écrasement supérieure à 3000 N par mètre linéaire de tuyaux à 100°C.

Cependant, quel que soit le tuyau, la maniabilité minimale de l'enrobé, mesurée avec un maniabilimètre Nynas à la température de mise en œuvre des enrobés hydrocarbonés, est inférieure à 400N.

Dans un mode de réalisation de l'invention, la maniabilité de l'enrobé est comprise entre 300 N et 400 N. Alors, la résistance à l'écrasement des tuyaux est supérieure à 4500 N par mètre linéaire de tuyaux à 100°C.

Dans un autre mode de réalisation de l'invention, la maniabilité de l'enrobé est inférieure à 300 N. Alors, la résistance à l'écrasement des tuyaux est supérieure à 3000 N par mètre linéaire de tuyaux à 100°C.

La profondeur d'indentation varie avantageusement de 0,5 d à 1,5 d, plus avantageusement de 0,8 d à 1,2 d, avec d représentant le diamètre des tuyaux. Pour assurer une planéité de la couche d'intégration, il est souhaitable que pas plus de la moitié du diamètre des tuyaux dépasse de la couche. Par contre, pour assurer de bons échanges thermiques avec la chaussée au-dessus, les tuyaux doivent être aussi proches que possible de la surface.

Un grand avantage du procédé selon l'invention est que le compactage peut être réalisé directement, sans nécessiter d'étape(s) supplémentaire(s) de protection des tuyaux.

En outre, les étapes suivantes, d'application au-dessus de la couche d'intégration de la ou des couche(s) de surface pour revêtement de voirie peuvent être réalisées directement, sans nécessiter d'étape(s) supplémentaire(s) de protection des tuyaux. En effet, la couche d'intégration permet non seulement de maintenir au sol la géométrie recherchée mais également de protéger les tuyaux.

Les enrobés hydrocarbonés sont répandus selon les procédés traditionnels, avantageusement au finisseur. On pourra utiliser des enrobés hydrocarbonés à chaud ou tièdes, avec une préférence pour des enrobés hydrocarbonés tièdes.

En particulier, la température de mise en œuvre des enrobés hydrocarbonés est inférieure à 160°C, avantageusement inférieure à 140°C, plus avantageusement inférieure à 130°C. Dans un mode de réalisation, la température de mise en œuvre des enrobés hydrocarbonés est comprise entre 60°C et 120°C, avantageusement comprise entre 90°C et 120°C.

Les tuyaux du dispositif sont ensuite déposés et indentés par compactage dans les enrobés hydrocarbonés pendant leur durée de mise en œuvre. Par le procédé selon l'invention, les tuyaux ne sont pas dégradés, en particulier déformés, par les rouleaux du compacteur et restent en position, quel que soit leur courbure, et ainsi y compris dans les boucles ou virages. Il en va de même lorsque les finisseurs, y compris ceux à chenilles, passent ensuite sur les tuyaux indentés.

Comme cela est de pratique, le compactage pourra se faire en plusieurs passes.

Avantageusement, on n'applique pas de vibration lors du compactage. Ainsi, avantageusement, lors de l'étape c) on n'applique pas de vibration.

Le conditionnement des tuyaux sous la forme de rouleau ou de plaques permet d'assurer une cadence de pose élevée. Avantageusement, la cadence de pose et d'indentation est supérieure à 2 m/min, plus avantageusement de 4 m/min à 10 m/min.

La pose des tuyaux simultanée à la conception de la couche d'intégration selon l'invention, en particulier avec un enrobé hydrocarboné compact, permet d'assurer un contact optimal entre les tuyaux et les enrobés hydrocarbonés et ainsi limiter la présence de vide autour des tuyaux. Ainsi, le procédé selon l'invention ne nécessite pas l'emploi d'un matériau de comblement et/ou adhésif.

Avantageusement, le dispositif pour échangeur de chaleur intégré dans la couche d'intégration ne comprend pas d'élément métallique. Ainsi, les matériaux constituant le dispositif (les tuyaux, le substrat et éléments d'attache éventuels) ne font pas obstacle à un recyclage, avantageusement simultané, des enrobés, tel que cela a déjà été explicité précédemment.

L'ajout de tuyaux, en polymère, dans la couche de surface n'est pas non plus préjudiciable à son recyclage.

La couche d'intégration comprend avantageusement moins de 10%, plus avantageusement moins de 5%, encore plus avantageusement moins de 1%, en volume de polymère par $m^3$ d'enrobés hydrocarbonés. Ainsi, cette couche, après rabotage lors de la réfection de la chaussée, peut être recyclée et réutilisée sans traitement préalable.

L'épaisseur de la couche d'intégration varie avantageusement de d à 10 cm, plus avantageusement de d à 8 cm, avec d représentant le diamètre des tuyaux.

Comme évoqué précédemment, la couche d'intégration peut être isolante.

En complément ou en alternative, le procédé peut comprendre une étape, préalable au répandage des enrobés hydrocarbonés formant la couche d'intégration selon l'invention, d'application d'une couche de matériaux isolants.

Ces matériaux isolants peuvent par exemple être une couche d'enrobés comprenant les granulats légers décrits précédemment, une isolation thermique en verre cellulaire qui se présente sous forme de plaques de format 60 cm x 45 cm ou 120 cm x 60 cm, et composée de bulles de verre rigides et hermétiquement closes commercialisé sous le nom FOAMGLAS®, du polystyrène, ...

Avantageusement, la conductivité thermique, λ, de la couche de matériaux isolants est inférieure à 1 W/m.K.

Cette couche de matériaux isolant est avantageusement mise en œuvre lorsque la couche d'intégration n'est pas elle-même isolante. Cette couche de matériaux isolant peut aussi remplir la fonction de couche support.

Une couche d'accrochage peut être déposée sur la couche d'intégration. Cette couche d'accrochage permet d'améliorer l'accrochage entre les enrobés hydrocarbonés de la couche d'intégration et la couche de roulement ou la couche de liaison. Elle permet également de protéger la couche d'intégration comprenant le dispositif pour échangeur thermique.

La couche d'accrochage répond aux spécifications de la norme NF P 98-150-1 de juin 2010.

Avantageusement, le procédé selon l'invention comprend les étapes successives suivantes :

aaa) Le cas échéant, application d'une couche de matériaux isolants, puis

aa) Le cas échéant, application d'une couche d'adhésion, puis

a) répandage à une température inférieure à 160°C d'enrobés hydrocarbonés, comprenant une fraction granulaire, un liant hydrocarboné, lesdits enrobés hydrocarbonés étant maniables, ayant une maniabilité, mesurée avec un maniabilimètre Nynas à la température de mise en œuvre des enrobés hydrocarbonés, inférieure à 400N, puis

b) dépôt de tuyaux, lesdits tuyaux ayant une résistance à l'écrasement supérieure à 3000 N par mètre linéaire de tuyaux à 100°C, une dilatation thermique inférieure à $200.10^{-6}$ m/mK à 20°C, puis

c) indentation des tuyaux déposés dans ladite couche d'intégration par compactage desdits enrobés pendant la durée de maniabilité desdits enrobés, pour former une couche d'intégration comprenant les tuyaux d'un dispositif pour échangeur de chaleur ;

dd) application d'une couche d'accrochage, avantageusement une couche d'enrobés hydrocarbonés à froid, puis

d) Application d'une couche de roulement.

La couche d'accrochage répond aux spécifications de la norme NF P 98-150-1 de juin 2010.

On peut également déposer au-dessus de la couche d'intégration ou de la couche d'accrochage, le cas échéant, une couche colorée servant d'avertisseur visuel.

Les couches de surface du revêtement de voiries constituent un échangeur thermique fonctionnant en captation ou en restitution de chaleur, en fonction du climat, de large surface. En fonctionnement, un fluide caloporteur circule dans les tuyaux reliés à tout système thermique adapté, incluant une nappe de géothermie en profondeur, une sonde géothermique verticale, une pompe à chaleur, ...

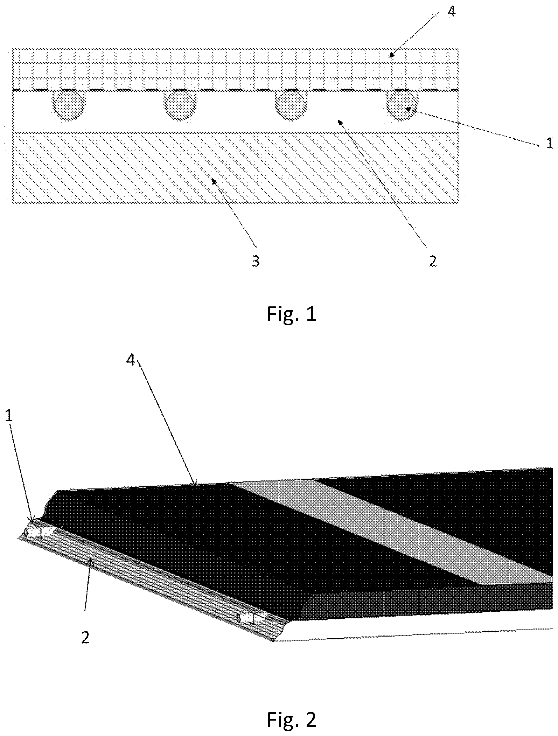

Une vue en coupe d'un revêtement de voiries comprenant en surface un dispositif pour échangeur de chaleur est représentée sur la figure 1.

Les tuyaux 1, dans lesquels circule un fluide caloporteur, sont indentés dans une couche d'intégration 2. Cette couche d'intégration 2 peut être de forte conductivité ou isolante, en fonction de la nature de la fraction granulaire de l'enrobé hydrocarboné.

Cette couche d'intégration 2 est déposée sur une couche support 3, qui pourra être une couche isolante. Cette couche support 3 est avantageusement isolante lorsque la couche d'intégration 2 n'est pas elle-même isolante.

Sur la couche d'intégration 2 est déposée une couche de roulement 4. Cette couche de roulement 4 a une forte conductivité et constitue l'échangeur thermique qui va capter l'énergie solaire ou constitue la surface à réchauffer, notamment en vue d'un déneigement ou déverglaçage de chaussée.

Sur la figure 2, on a représenté la couche d'intégration 2 comprenant les tuyaux 1 sur laquelle une couche de roulement 4 est déposée.

Sur la figure 3, un exemple de géométrie possible des tuyaux 1 dans la couche d'intégration 2 est représenté.

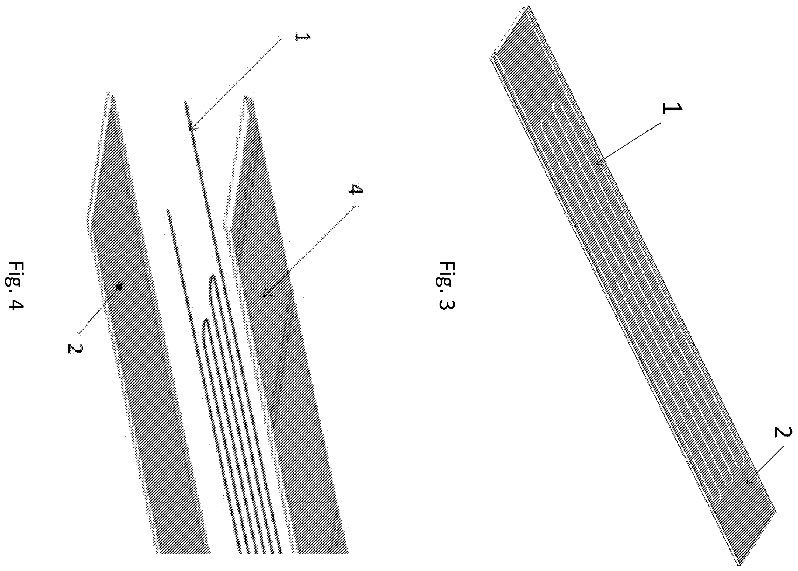

Une vue éclatée de la couche d'intégration 2, des tuyaux 1 et de la couche de roulement 4 est représentée sur la figure 4.

**Protocoles :**

*Maniabilité :*

Un essai de maniabilité réalisé suivant la norme 98-258-1, de 2013, et adapté :

- avec un maniabilimètre Nynas (version dit « grand volume » et ayant une largeur de 30 cm, une longueur de 32 cm et une hauteur de 13 cm)
- à une compacité de l'enrobé de 75 % (teneur en vide : 25%)
- avec une température inférieure ou égale à la température de mise en œuvre (température adaptée)

*Compacité :*

La compacité d'une formule est mesurée au moyen d'une presse à cisaillement giratoire (NF EN 12697-31 d'août 2007). Une éprouvette cylindrique d'enrobé est compactée en combinant une action de cisaillement rotative et une force résultante axiale appliquée par une tête mécanique.

Cet essai permet de déterminer la compacité d'une éprouvette pour un nombre de giration donné en mesurant la hauteur d'éprouvette associée.

*Essai d'indentation en laboratoire :*

Un enrobé est mis en œuvre dans sur banc de compactage suivant la norme NF P 12697-33 de septembre 2007, dans un moule de dimension 500 mm x 180 mm à sa température de mise en œuvre. La compacité de l'enrobé est amené à 75% par un compactage au rouleau. Les tuyaux sont positionnés à la surface de l'enrobé, transversalement au sens de circulation du rouleau. Ils sont maintenus en place par un ruban de scotch placé dans le sens de circulation du rouleau. Les tuyaux sont indenté dans l'enrobé par 6 à 10 passages de rouleau.

La bonne indentation du tuyau est jugée visuellement sur deux critères : la forme de l'empreinte laissée par le tuyau dans l'enrobé : celle-ci doit être profonde d'une dimension proche du diamètre du tuyau. La forme de la section du tuyau à l'issu de l'essai, celui-ci doit ne doit pas s'être ovalisé.

*Mesures de conductivité thermique:*

Pour déterminer la conductivité thermique, une éprouvette cylindrique (diamètre 16 cm, épaisseur qui peut varier, le plus souvent de 5 cm à 10 cm) du matériau à caractériser, après une durée de murissement de 14 jours, est soumise à une différence de température : 25°C sur une face, 10°C sur l'autre face. La mesure du flux thermique la traversant, la différence de température entre les faces et l'épaisseur de l'éprouvette permettent de déterminer la conductivité thermique du matériau en utilisant la relation :

$$\varnothing = - \lambda \cdot \Delta T / L \text{ avec :}$$

avec :

- $\lambda$      la conductivité thermique exprimée en W/m.K
- $\varnothing$      le flux thermique traversant l'éprouvette exprimé en $W/m^2$
- $\Delta T$      la différence de température aux bords de l'éprouvette exprimée en °C ou Kelvin
- $L$      La hauteur de l'éprouvette en mm

*Ecrasement :*

Pour déterminer la résistance à l'écrasement des tuyaux, un échantillon de tuyau, d'une longueur comprise entre 5 cm et 10 cm est découpé. Cet échantillon est ensuite placé pendant 2 heures dans une étuve à une température de 100°C. L'essai d'écrasement est ensuite réalisé à la température de 100°C. L'échantillon est ensuite positionné, sur sa génératrice, entre les deux plateaux parallèles d'une presse, placés dans une enceinte climatique régulée à 100°C. La presse impose à l'échantillon un déplacement de 10 mm/min. La valeur de résistance à l'écrasement est déterminée lorsque le diamètre de l'échantillon est divisé par deux par rapport au diamètre initial de l'échantillon. Elle est exprimée en Newton par mètre linéaire de tuyau en utilisant la relation :

$$Rt = Ft / Lt \text{ avec :}$$

avec :

- Rt : résistance à l'écrasement du tuyau en N/m
- Ft : force développée pour écraser le tuyau jusqu'à une réduction de moitié de son diamètre en N
- Lt : longueur de l'échantillon soumis à l'essai en mm

<u>Dilatation thermique :</u> elle est mesurée selon la norme NF EN ISO 2505, de septembre 2005,

*Adhérence au bitume :*

Les tuyaux adhèrent au bitume lorsque le critère suivant est rempli : les tuyaux sont badigeonnés d'une émulsion cationique de bitume 50/70 dosée à 65% en poids de bitume conforme à la norme NF EN 13808 d'août 2013 à l'aide un pinceau. Après une minute on procède à un examen visuel. Si l'émulsion ne perle pas à la surface l'adhérence du tuyau est suffisante.

L'exemple qui suit illustre l'invention et présente également des essais comparatifs. Il rapporte des essais réalisés en condition chantier.

**Description des échantillons :**

<u>Tuyaux</u>

Trois types de tuyaux sont évalués :

1. TUYAU 1 : Tuyau en polyéthylène haute densité, réticulé avec barrière anti-oxygène (BAO) de diamètre 20 mm et épaisseur de peau 1.9 mm. Le coefficient de dilatation de ce tuyau est de $140.10^{-6}$ m/mK à 20°C. Le retrait à chaud, mesuré suivant la norme NF EN ISO 2505 de septembre 2005, est inférieur à 3% (en étuve, à 150°C pendant 60 mn). La résistance à l'écrasement mesuré à 100°C est de 3000 N par mètre linéaire de tuyaux.

2. TUYAU 2 : Tuyau en polyéthylène haute densité de diamètre 20 mm et épaisseur de peau de 3 mm. Le coefficient de dilatation du PE-HD est de $280.10^{-6}$ m/mK à 20°C. La résistance à l'écrasement mesuré à 100°C est de 10000 N par mètre linéaire de tuyaux.

3. TUYAU 3: Tuyau en polypropylène de diamètre 17 mm et d'épaisseur de peau de 2,2 mm. Le coefficient de dilatation de ce tuyau est de $160.10^{-6}$ m/mK à 23°C. Le retrait à chaud, mesuré suivant la norme NF EN ISO 2505 de septembre 2005, est inférieur à 2% (en étuve, à 150°C pendant 60 mn). La résistance à l'écrasement mesuré à 100°C est de 4500 N par mètre linéaire de tuyaux.

4. TUYAU 4: Tuyau en polyéthylène haute densité, réticulé de diamètre 16 mm et épaisseur de peau 2 mm. Le coefficient de dilatation de ce tuyau est de $140.10^{-6}$ m/mK à 20°C. Le retrait à chaud, mesuré suivant la norme NF EN ISO 2505 de septembre 2005, est inférieur à 3% (en étuve, à 150°C pendant 60 mn). La résistance à l'écrasement mesuré à 100°C est de 2500 N par mètre linéaire de tuyaux.

<u>Support tuyaux</u>

Plusieurs substrats ont été utilisés en tant que support pour les serpentins de tuyaux :

1. SUBSTRAT 1: Géo-grille de renforcement de chaussée en fibre de verre avec des mailles de 25 mm x 25 mm, avec surface adhésive intégrée sur une face

2. SUBSTRAT 2: Géo-grille de renforcement de chaussée en fibre de verre avec des mailles de 25 mm x 25 mm.

3. SUBSTRAT 3: Rails en polypropylène permettant de clipper les tuyaux pour les maintenir en forme.

4. SUBSTRAT 4 : Dalles d'engazonnement en polyéthylène haute densité.

Les nappes de tuyaux sont préfabriquées suivant plusieurs motifs :

- transversalement (c'est à dire que les tuyaux seront disposés perpendiculairement à l'avancée de l'atelier de mise en œuvre de l'enrobé) sous un motif ayant 4 à 6 lignes droites parallèles de 4.5 m, espacées de 30 cm, et 3 à 5 virages dont l'angle de courbure est de 180°, ou
- longitudinalement (c'est à dire que les tuyaux seront disposés parallèlement à l'avancée de l'atelier de mise en œuvre de l'enrobé) sous d'un motif ayant 4 à 6 lignes droites parallèles de 4.5 m, espacées de 30 cm et 3 à 5 virages dont l'angle de courbure est de 180°

Le TUYAU 3 est préalablement mis en œuvre par thermoformage. Le tube est posé à chaud par irrigation d'eau chaude à 80°C minimum à l'aide d'un appareil constitué d'un réchauffeur et d'un dérouleur lors de l'étape b) pour leur donner la forme désirée. Lors de l'indentation, il n'y a plus de circulation d'eau dans les tuyaux.

Les tuyaux, d'une longueur de l'ordre de 30 m, sont ouverts sur l'extérieur à chacune des deux extrémités et ne contiennent donc rien d'autre que l'air ambiant.

Formule enrobés

Les enrobés, ENROBE-1 suivants ont été utilisés dans les essais de laboratoire :

Tableau 1

|  |  | % en poids par rapport au poids total de la fraction granulaire |
|---|---|---|
| Fraction granulaire | filler* (<0,063 mm) | 9,8 % |
| | Sable (0,063 - 2 mm) Microdiorite / THIVIERS | 30,8% |
| | Granulats 2/10 mm Microdiorite / THIVIERS | 59,4% |
| Bitume 35/50 Additif de maniabilié | | 5,0%** Néant |
| Température de fabrication | | 160 °C |
| Maniabilité NF P 98-258-1 de 2013 | | 300 N |
| Orniérage (NF EN 12697-22, 2007) Nombre de cycles Ornière (%) | | 30000 9% |
| PCG (NF EN 12697-31, 2007) Nombre de giration Vide (%) | | 60 4,1 |
| * filler = fines ** % =, par rapport au poids total de l'enrobé | | |

Enrobé fabriqué à chaud sans séquençage ou moussage du liant. La maniabilité est apportée par la température de fabrication et le squelette granulaire.

Les enrobés, ENROBE-2 suivants ont été utilisés dans les essais de laboratoire :

Tableau 2

|  |  | % en poids par rapport au poids total de la fraction granulaire |
|---|---|---|
| Fraction granulaire | filler* (<0,063 mm) | 8,9 % |
| | Sable (0,063 - 2 mm) Microdiorite / THIVIERS | 27,8% |
| | Granulats 2/10 mm Microdiorite / THIVIERS | 63,3% |
| Bitume 13/20 Additif de maniabilié | | 5,4%** Néant |
| Température de fabrication | | 160 °C |
| Maniabilité NF P 98-258-1 de 2013 | | 500 N |
| Orniérage (NF EN 12697-22, 2007) Nombre de cycles Ornière (%) | | 30000 3,2% |

(suite)

| | % en poids par rapport au poids total de la fraction granulaire |
|---|---|
| PCG (NF EN 12697-31, 2007) Nombre de giration Vide (%) | 60 5,1 |

| |
|---|
| * filler = fines ** % =, par rapport au poids total de l'enrobé |

Enrobé fabriqué à chaud sans séquençage.

Les enrobés, ENROBE-3 suivants ont été utilisés dans les essais sur planche d'essai chantier :

Tableau 3

| | | % en poids par rapport au poids total de la fraction granulaire | | |
|---|---|---|---|---|
| Fraction granulaire | filler* (<0,063 mm) | 8,3 % | | |
| | Sable (0,063 - 2 mm) SGC | 37,1% | | |
| | Granulats 2/8 mm SGC | 56,5% | | |
| Bitume 35/50 Additif de maniabilié | | 5,0 %** 0,4% | | |
| Température de fabrication | | 140 °C | | |
| Maniabilité NF P 98-258-1 de 2013 | | 350 N | | |
| Orniérage (NF EN 12697-22, 2007) Nombre de cycles Ornière (%) | | - | | |
| PCG (NF EN 12697-31, 2007) Nombre de giration Vide (%) | | 60 5,4 | | |

| |
|---|
| * filler = fines ** % =, par rapport au poids total de l'enrobé |

Enrobé fabriqué à tiède sans séquençage ou moussage du liant. La maniabilité est apportée par l'additif de maniabilité et le squelette granulaire.

L'additif de maniabilité est une huile de ricin hydrogénée présentant les caractéristiques suivantes :

| | |
|---|---|
| Point de fusion (°C) | 84-89 |
| Indice d'acide (mg KOH/g) | $\leq 2$ |
| Indice de saponification (mg KOH/g) | 174 / 186 |
| Indice d'iode (gl$_2$/100g) | $\leq 3,5$ |
| Indice d'hydroxyle (mg KOH/g) | 155 - 165 |
| Indice d'acétyle | $\geq 139$ |
| Insaponifiable (%) | $\leq 1,0$ |

Cette huile de ricin hydrogénée présente, après saponification, approximativement la composition en acides

**EP 3 516 117 B1**

gras suivante (pourcentages exprimés en poids par rapport au poids total) :

87% d'acide 12-hydroxy-octadécanoïque
11% d'acide stéarique
2% d'acide palmitique
des traces d'acide (9, 10)-dihydroxystéarique

**Résultats**

Pour les SUBSTRAT 1 à 3, la nappe préfabriquée est disposée directement sur l'enrobé en sortie de finisseur avant d'être indentée par le compacteur. Le finisseur est de type ABG 7820 avec une largeur de table de pose réglable de 2.5 à 5 m ; il a permis de réaliser une voie de 5 m de large en une seule passe. Le compacteur est de type Hamm DV 90 (tandem vibrant), son poids est d'environ 9 tonnes.

Les résultats sont reportés dans le tableau suivant :

Tableau 4

| Nature du tuyau | Substrat | Réalisation | Observations |
|---|---|---|---|
| TUYAU 1 | SUBSTRAT 1 | La nappe est disposée transversalement directement sur l'enrobé en sortie de finisseur avant d'être indentée par le compacteur | Manque d'adhérence du tuyau Manque de rigidité du tuyau (écrasement, aplatissement du tuyau) pour cette maniabilité d'enrobé |
| | SUBSTRAT 2 | | |
| TUYAU 1 | SUBSTRAT 1 | La nappe est disposée longitudinalement directement sur l'enrobé en sortie de finisseur avant d'être indentée par le compacteur | Difficulté de mise en œuvre : manque d'adhérence impliquant un déplacement menant à la destruction de la nappe préfabriquée |
| | SUBSTRAT 2 | | |
| TUYAU 2 | SUBSTRAT 1 | Des nappes de tuyaux fixés sur des grilles collantes et non collantes sont disposées transversalement directement sur l'enrobé en sortie de finisseur avant d'être indentée par le compacteur | Rigidité des tuyaux suffisante : Pas d'ovalisation du tuyau Adhérence du tuyau satisfaisante Retrait thermique significatif entraînant la sortie des tuyaux au niveau des virages Pas de différence significative en fonction du substrat |
| | SUBSTRAT 2 | | |
| TUYAU 2 | SUBSTRAT 1 | La nappe est disposée longitudinalement directement sur l'enrobé en sortie de finisseur avant d'être indentée par le compacteur | Difficulté de mise en œuvre en longitudinal : déplacement de la nappe lors de l'étape de compactage |
| | SUBSTRAT 2 | | |
| TUYAU 3 | SUBSTRAT 1 | La nappe est disposée transversalement directement sur l'enrobé en sortie de finisseur avant d'être indentée par le compacteur | Rigidité des tuyaux suffisante : Pas d'ovalisation du tuyau Adhérence du tuyau satisfaisante Pas de retrait des tuyaux qui restent indentés |
| TUYAU 3 | SUBSTRAT 1 | La nappe est disposée transversalement longitudinalement directement sur l'enrobé en sortie de finisseur avant d'être indentée par le compacteur | Rigidité des tuyaux suffisante : Pas d'ovalisation du tuyau Adhérence du tuyau satisfaisante Les tuyaux restent indentés |
| TUYAU 1 | SUBSTRAT 4 | Un serpentin de tuyau est fixé sur des dalles de stabilisation avant application des enrobés | Destruction de la nappe au passage du finisseur : Les nappes ne sont pas solidaires du sol support et se déforment au passage du finisseur. |

16

(suite)

| Nature du tuyau | Substrat | Réalisation | Observations |
|---|---|---|---|
| Hors procédé selon l'invention -INVTUYAU 3 | - | Les tuyaux mis en forme, sont déposés sur le sol et tenus par des agrafes avant application des enrobés | Les tuyaux se déforment lors du passage du finisseur, c'est-à-dire lors de l'application des enrobés Apparition de fissurations en surface |

Il ressort de cette série de tests que le choix d'un enrobé 0/6 maniable (350 N) permet d'indenter des tuyaux, non protégés, sans les déformer ou les dégrader, dès lors qu'ils sont suffisamment rigides (résistance à l'écrasement supérieure à 4500 N par mètre linéaire de tuyaux à 100°C), et pour ce type d'enrobé, adhérents au bitume. Dans un enrobé 0/6 maniable (350 N), un tuyau ayant une résistance à l'écrasement supérieure à 4500 N par mètre linéaire de tuyaux à 100°C et une dilatation thermique maîtrisée (coefficient de dilatation inférieur à $160.10^{-6}$ m/mK à 20-25°C) permet d'obtenir des résultats satisfaisants sans moyen de protection thermique et/ou mécanique, en particulier sans refroidissement ou sans mise sous pression.

La couche d'intégration est nécessaire et suffisante pour protéger les tuyaux lors du passage des engins de chantier. Lorsque les tuyaux peuvent être mis en forme par mémoire de forme, l'emploi d'un substrat ne semble pas utile.

Il convient de noter que pour indenter des tuyaux moins rigides (résistance à l'écrasement comprise entre 3000 N et à 4500 N par mètre linéaire de tuyaux à 100°C), il faut augmenter la maniabilité de l'enrobé hydrocarboné.

Autres résultats en laboratoire :

Des essais d'indentation ont été réalisés à l'échelle de maquette de laboratoire.

Les résultats sont reportés dans le tableau suivant :

Tableau 5

| | TUYAU-1 | TUYAU-2 | TUYAU-3 | TUYAU-4 |
|---|---|---|---|---|
| ENROBE-1 Très Maniable Sans additif | Indentation satisfaisante | Indentation satisfaisante | Indentation satisfaisante | Tuyau totalement écrasé |
| ENROBE-2 Peu maniable Sans additif | Mauvaise indentation avec ovalisation du tuyau | Indentation satisfaisante | Mauvaise indentation avec ovalisation du tuyau | Tuyau totalement écrasé |
| ENROBE-3 Maniable Avec additif | Mauvaise indentation avec ovalisation du tuyau | Indentation satisfaisante | Indentation satisfaisante | Tuyau totalement écrasé |

## Revendications

1. Procédé de fabrication d'un revêtement de voiries comprenant en surface des tuyaux d'un dispositif pour échangeur de chaleur, **caractérisé en ce qu'**il comprend les étapes suivantes :

   a) répandage à une température inférieure à 160°C d'enrobés hydrocarbonés, comprenant une fraction granulaire, un liant hydrocarboné, pour former une couche d'intégration (2) , lesdits enrobés hydrocarbonés étant maniables, ayant une maniabilité, mesurée selon la norme 98-258-1 de 2013, avec un maniabilimètre Nynas à la température de mise en œuvre des enrobés hydrocarbonés, inférieure à 400N, puis

   b) dépôt de tuyaux (1) sur cette couche d'intégration, lesdits tuyaux étant en polymère, ayant une résistance à l'écrasement supérieure à 3000 N par mètre linéaire de tuyaux à 100°C, un coefficient de dilatation thermique inférieur à $200.10^{-6}$ $K^{-1}$ à 20°C de sorte à permettre leur indentation même en l'absence de moyen de refroidissement ou de moyen de mise sous pression ; la résistance à l'écrasement des tuyaux étant déterminée selon le protocole suivant :

- découper un échantillon de tuyau, d'une longueur comprise entre 5 cm et 10 cm ,
- placer ensuite cet échantillon pendant 2 heures dans une étuve à une température de 100°C,
- positionner l'échantillon sur sa génératrice entre les deux plateaux parallèles d'une presse, placés dans une enceinte climatique régulée à 100°C,
- imposer à l'échantillon un déplacement de 10 mm/min via la presse,
- déterminer la valeur de résistance à l'écrasement lorsque le diamètre de l'échantillon est divisé par deux par rapport au diamètre initial de l'échantillon,
- exprimer la résistance de l'écrasement en Newton par mètre linéaire de tuyau en utilisant la relation :

$$Rt = Ft / Lt \text{ avec :}$$

avec :

- Rt : résistance à l'écrasement du tuyau en N/m
- Ft : force développée pour écraser le tuyau jusqu'à une réduction de moitié de son diamètre en N
- Lt : longueur de l'échantillon soumis à l'essai en mm, puis

c) indentation des tuyaux déposés dans ladite couche d'intégration par compactage desdits enrobés pendant la durée de maniabilité desdits enrobés, pour former une couche d'intégration comprenant des tuyaux du dispositif pour échangeur de chaleur, puis

d) application au-dessus d'une couche de surface pour revêtement de voirie, en particulier une couche de roulement (4).

2. Procédé selon la revendication précédente, **caractérisé en ce qu'**on impose une géométrie aux tuyaux du dispositif pour échangeur de chaleur avant l'étape b) de dépôt.

3. Procédé selon l'une quelconque des revendications précédentes, **caractérisé en ce que** lors de l'étape c) on n'applique pas de vibrations.

4. Procédé selon l'une quelconque des revendications précédentes, **caractérisé en ce que** la profondeur d'indentation varie de 0,5 d à 1,5 d, avantageusement de 0,8 d à 1,2d, avec d représentant le diamètre des tuyaux.

5. Procédé selon l'une quelconque des revendications précédentes, **caractérisé en ce que** la température de mise en œuvre des enrobés hydrocarbonés est inférieure à 130°C, avantageusement comprise entre 60°C et 120°C, plus avantageusement comprise entre 90°C et 120°C.

6. Procédé selon l'une quelconque des revendications précédentes, **caractérisé en ce que** la compacité de la formule d'enrobé mesurée au moyen d'une presse à cisaillement giratoire à 60 girations, selon la norme NF EN 12697-31 d'août 2007, est supérieure à 90%.

7. Procédé selon l'une quelconque des revendications précédentes, **caractérisé en ce que** la maniabilité des enrobés hydrocarbonés, mesurée avec un maniabilimètre Nynas à la température de mise en œuvre des enrobés hydrocarbonés, est inférieure à 300N, avantageusement inférieure à 250 N.

8. Procédé selon l'une quelconque des revendications précédentes, **caractérisé en ce que** le liant comprend un additif de maniabilité, présentant une température de fusion supérieure à 60 °C et inférieure à 130°C, en particulier l'additif de maniabilité est un triglycéride d'acides gras, l'acide gras étant choisi dans le groupe constitué par les acides gras saturés comprenant de 12 à 30 atomes de carbone, éventuellement substitués par au moins une fonction hydroxyle ou par un radical alkyle en $C_1$-$C_4$, en particulier l'acide gras est choisi dans le groupe constitué par l'acide 12-hydroxy-octadécanoïque, l'acide hexadécanoïque, l'acide octadécanoïque, l'acide 9,10-dihydroxy- octadécanoïque, l'acide icosanoïque, l'acide nonadécanoïque, et leurs mélanges.

9. Procédé selon l'une quelconque des revendications précédentes, **caractérisé en ce que** les éléments de la fraction granulaire des enrobés hydrocarbonés ont des dimensions comprises entre 0 mm et 10 mm, avantageusement entre 0 mm et 6 mm.

10. Procédé selon l'une quelconque des revendications précédentes, **caractérisé en ce que** la conductivité thermique, λ, des enrobés hydrocarbonés est inférieure à 1 W/m.K.

11. Procédé selon la revendication précédente, **caractérisé en ce que** la fraction granulaire des enrobés hydrocarbonés comprend des éléments choisis parmi des granulats légers de masse volumique inférieure à 1,6 t/m³, avantageusement tout ou partie des granulats légers sont des granulats légers non absorbants ayant un coefficient d'absorption d'eau inférieur à 15%.

12. Procédé selon l'une quelconque des revendications précédentes, **caractérisé en ce que** les enrobés hydrocarbonés sont résistants à l'orniérage, avantageusement avec un pourcentage d'ornières après 30 000 cycles inférieur à 7,5%, avantageusement inférieur à 5%.

13. Procédé selon l'une quelconque des revendications précédentes, **caractérisé en ce que** le dispositif pour échangeur de chaleur indenté dans ladite couche d'intégration ne comprend pas d'élément métallique.

14. Procédé selon l'une quelconque des revendications précédentes, **caractérisé en ce que** l'épaisseur de la couche d'intégration varie de d à 10 cm, avec d représentant le diamètre des tuyaux.

15. Procédé selon l'une quelconque des revendications précédentes, **caractérisé en ce que** l'épaisseur combinée de la ou des couche(s) appliquée(s) par la suite sur ladite couche d'intégration est inférieure à 30 cm, avantageusement inférieure à 10 cm.

**Patentansprüche**

1. Verfahren zur Herstellung eines Straßenbelags, der an der Oberfläche Rohre einer Vorrichtung für Wärmetauscher umfasst, **dadurch gekennzeichnet, dass** es die folgenden Schritte umfasst:

   a) Aufbringen, bei einer Temperatur von unter 160 °C, von kohlenwasserstoffhaltigem Mischgut, umfassend einen Granulatanteil, ein kohlenwasserstoffhaltiges Bindemittel, um eine Integrationsschicht (2) zu bilden, wobei das kohlenwasserstoffhaltige Mischgut mit einer Verarbeitbarkeit, gemessen gemäß der Norm 98-258-1 von 2013 mit einem Maniabilimeter Nynas, bei Verarbeitungstemperatur des kohlenwasserstoffhaltigen Mischguts von unter 400 N verarbeitbar ist, dann

   b) Ablegen von Rohren (1) auf dieser Integrationsschicht, wobei die Rohre aus Polymer mit einer Druckfestigkeit von über 3000 N je Rohrlangmeter bei 100 °C, einer Wärmeausdehnungskoeffizient von unter $200.10^{-6}$ $K^{-1}$ bei 20 °C sind, so dass deren Eindrücken sogar bei Abwesenheit eines Kühlmittels oder eines Mittels zum Unter-Druck-Setzen gestattet ist; wobei die Druckfestigkeit der Rohre gemäß dem folgenden Protokoll bestimmt wird:

   - Abtrennen einer Rohrprobe einer Länge zwischen 5 cm und 10 cm,
   - darauffolgendes Platzieren dieser Probe für 2 Stunden in einen Ofen bei einer Temperatur von 100 °C,
   - Positionieren der Probe auf ihrer Mantellinie zwischen zwei parallelen Platten einer Presse, die in einer auf 100 °C eingestellten Klimakammer platziert sind,
   - erzwungenes Verlagern der Probe um 10 mm/min anhand der Presse,
   - Bestimmen des Druckfestigkeitswerts, wenn der Durchmesser der Probe in Bezug auf den Ausgangsdurchmesser der Probe durch zwei dividiert wird,
   - Ausdrücken der Druckfestigkeit in Newton je Rohrlangmeter unter Verwendung der Gleichung:

$$Rt = Ft / Lt \text{ mit:}$$

   mit:

   • Rt: Druckfestigkeit des Rohrs in N/m
   • Ft: Kraft, die entwickelt wird, um das Rohr bis zu einer Verringerung um die Hälfte seines Durchmessers zusammenzudrücken, in N
   • Lt: Länge der getesteten Probe in mm, dann

   c) Eindrücken der abgelegten Rohre in die Integrationsschicht durch Verdichten des Mischguts während der Verarbeitbarkeit des Mischguts, um eine Integrationsschicht zu bilden, die Rohre der Vorrichtung für Wärmetauscher umfasst, dann

d) darüber Aufbringen einer Oberflächenschicht für Straßenbelag, insbesondere einer Deckschicht (4).

2. Verfahren nach vorangehendem Anspruch, **dadurch gekennzeichnet, dass** den Rohren der Vorrichtung für Wärmetauscher vor dem Ablageschritt b) eine Geometrie aufgezwungen wird.

3. Verfahren nach einem der vorangehenden Ansprüche, **dadurch gekennzeichnet, dass** beim Schritt c) keine Vibrationen angewendet werden.

4. Verfahren nach einem der vorangehenden Ansprüche, **dadurch gekennzeichnet, dass** die Eindrücktiefe von 0,5 d bis 1,5 d, in vorteilhafter Weise von 0,8 d bis 1,2d schwankt, mit d als Durchmesser der Rohre.

5. Verfahren nach einem der vorangehenden Ansprüche, **dadurch gekennzeichnet, dass** die Verarbeitungstemperatur des kohlenwasserstoffhaltigen Mischguts unter 130 °C, in vorteilhafter Weise zwischen 60 °C und 120 °C, noch vorteilhafter zwischen 90 °C und 120 °C, liegt.

6. Verfahren nach einem der vorangehenden Ansprüche, **dadurch gekennzeichnet, dass** die Kompaktheit der Belagformel, gemessen mit einem Gyrator-Verdichter bei 60 Kreisbewegungen gemäß der Norm NF EN 12697-31 von August 2007, höher als 90 % ist.

7. Verfahren nach einem der vorangehenden Ansprüche, **dadurch gekennzeichnet, dass** die Verarbeitbarkeit des kohlenwasserstoffhaltigen Mischguts, gemessen mit einem Maniabilimeter Nynas bei Verarbeitungstemperatur des kohlenwasserstoffhaltigen Mischguts, niedriger als 300 N, in vorteilhafter Weise niedriger als 250 N ist.

8. Verfahren nach einem der vorangehenden Ansprüche, **dadurch gekennzeichnet, dass** das Bindemittel ein Verarbeitungsadditiv umfasst, das eine Schmelztemperatur von über 60 °C und von unter 130 °C aufweist, wobei das Verarbeitungsadditiv ein Fettsäuretriglycerid ist, wobei die Fettsäure aus der Gruppe ausgewählt ist, die von den gesättigten Fettsäuren gebildet ist, umfassend 12 bis 30 Kohlenstoffatome, eventuell substituiert durch mindestens eine Hydroxylfunktion oder durch ein $C_1$-$C_4$-Alkylradikal, wobei insbesondere die Fettsäure aus der Gruppe ausgewählt ist, die von 12-Hydroxy-octadecansäure, Hexadecansäure, Octadecansäure, 9,10-Dihydroxy-octadecansäure, Eicosansäure, Nonadecansäure und deren Gemischen gebildet ist.

9. Verfahren nach einem der vorangehenden Ansprüche, **dadurch gekennzeichnet, dass** die Elemente des Granulatanteils des kohlenwasserstoffhaltigen Mischguts Abmessungen zwischen 0 mm und 10 mm, in vorteilhafter Weise zwischen 0 mm und 6 mm, haben.

10. Verfahren nach einem der vorangehenden Ansprüche, **dadurch gekennzeichnet, dass** die Wärmeleitfähigkeit λ des kohlenwasserstoffhaltigen Mischguts unter 1 W/m.K beträgt.

11. Verfahren nach vorangehendem Anspruch, **dadurch gekennzeichnet, dass** der Granulatanteil des kohlenwasserstoffhaltigen Mischguts Elemente umfasst, die aus den leichten Granulaten mit einer Dichte von unter 1,6 t/m$^3$ ausgewählt sind, wobei in vorteilhafter Weise alle oder ein Teil der leichten Granulate nicht absorbierende leichte Granulate mit einem Wasserabsorptionskoeffizienten von unter 15 % sind.

12. Verfahren nach einem der vorangehenden Ansprüche, **dadurch gekennzeichnet, dass** das kohlenwasserstoffhaltige Mischgut spurrillenbeständig ist, in vorteilhafter Weise mit einem Spurrillenprozentsatz nach 30.000 Zyklen von unter 7,5 %, in vorteilhafter Weise von unter 5%.

13. Verfahren nach einem der vorangehenden Ansprüche, **dadurch gekennzeichnet, dass** die in die Integrationsschicht eingedrückte Vorrichtung für Wärmetauscher kein Metallelement umfasst.

14. Verfahren nach einem der vorangehenden Ansprüche, **dadurch gekennzeichnet, dass** die Dicke der Integrationsschicht von d bis 10 cm schwankt, wobei d den Durchmesser der Rohre darstellt.

15. Verfahren nach einem der vorangehenden Ansprüche, **dadurch gekennzeichnet, dass** die kombinierte Dicke der danach auf die Integrationsschicht aufgebrachten Schicht/en unter 30 cm, in vorteilhafter Weise unter 10 cm beträgt.

**Claims**

1. A process for manufacturing a road pavement comprising on its surface pipes of a heat exchanger device, **characterized in that** it comprises the following steps:

    a) spreading at a temperature below 160°C of asphalt mixes comprising a granular fraction, a hydrocarbon binder, to form an embedding layer (2), said asphalt mixes being workable, having a workability, measured according to standard 98-258-1 of 2013, with a Nynas workability meter at the working temperature of the asphalt mixes, of less than 400 N, then

    b) depositing pipes (1) on this embedding layer, said pipes being made of polymer, having a crushing strength greater than 3000 N per linear meter of pipe at 100°C, a thermal expansion coefficient less than $200.10^{-6}$ $K^{-1}$ at 20°C so as to allow their indentation even in the absence of cooling means or pressurizing means; the crushing strength of the pipes being determined according to the following protocol:

    - cut a sample of pipe, with a length comprised between 5 cm and 10 cm,
    - then place this sample for 2 hours in an oven at a temperature of 100°C,
    - position the sample on its generator between the two parallel plates of a press, placed in a climatic chamber set to 100°C,
    - impose on the sample a displacement of 10 mm/min via the press,
    - determine the crushing strength value when the diameter of the sample is halved from the original diameter of the sample,
    - express the crushing strength in newtons per linear meter of pipe using the relation:

    $$Rt = Ft \; / \; Lt \text{ with:}$$

    with:

      • Rt: crushing strength of the pipe in N/m
      • Ft: force developed to crush the pipe to half its diameter in N
      • Lt: length of the sample subjected to the test in mm, then

    c) indentation of the pipes deposited in said embedding layer by compacting said mixes during the workability period of said mixes, to form an embedding layer comprising pipes of the heat exchanger device, then

    d) application over a surface layer for road surfacing, in particular a wearing course (4).

2. The process as claimed in the preceding claim, **characterized in that** a geometry is imposed on the pipes of the heat exchanger device before step b) of deposition.

3. The process as claimed in any one of the preceding claims, **characterized in that** during step c) no vibrations are applied.

4. The process as claimed in any one of the preceding claims, **characterized in that** the indentation depth varies from 0.5 d to 1.5 d, advantageously from 0.8 d to 1.2 d, with d representing the diameter of the pipes.

5. The process as claimed in any one of the preceding claims, **characterized in that** the working temperature of the asphalt mixes is below 130°C, advantageously comprised between 60°C and 120°C, more advantageously comprised between 90°C and 120°C.

6. The process as claimed in any one of the preceding claims, **characterized in that** the compactness of the asphalt mix formula measured by means of a gyratory shear press at 60 gyrations, according to standard NF EN 12697-31 of August 2007, is greater than 90%.

7. The process as claimed in any one of the preceding claims, **characterized in that** the workability of the asphalt mixes, measured with a Nynas workability meter at the working temperature of the asphalt mixes, is less than 300 N, advantageously less than 250 N.

8. The process as claimed in any one of the preceding claims, **characterized in that** the binder comprises a workability additive, having a melting temperature above 60°C and below 130°C, in particular the workability additive is a triglyceride of fatty acids, the fatty acid being selected from the group consisting of saturated fatty acids comprising 12 to 30 carbon atoms, optionally substituted by at least one hydroxyl function or by a $C_1$-$C_4$ alkyl radical, in particular the fatty acid is selected from the group consisting of 12-hydroxy-octadecanoic acid, hexadecanoic acid, octadecanoic acid, 9,10-dihydroxy-octadecanoic acid, icosanoic acid, nonadecanoic acid, and mixtures thereof.

9. The process as claimed in any one of the preceding claims, **characterized in that** the elements of the granular fraction of the asphalt mixes have dimensions comprised between 0 mm and 10 mm, advantageously between 0 mm and 6 mm.

10. The process as claimed in any one of the preceding claims, **characterized in that** the thermal conductivity, $\lambda$, of the asphalt mixes is less than 1 W/m·K.

11. The process as claimed in the preceding claim, **characterized in that** the granular fraction of the asphalt mixes comprises elements selected from light aggregates with a density of less than 1.6 t/m$^3$, advantageously all or part of the light aggregates are non-absorbent light aggregates having a water absorption coefficient below 15%.

12. The process as claimed in any one of the preceding claims, **characterized in that** the asphalt mixes are resistant to rutting, advantageously with a percentage of rutting after 30 000 cycles below 7.5%, advantageously below 5%.

13. The process as claimed in any one of the preceding claims, **characterized in that** the heat exchanger device embedded in said embedding layer does not comprise a metallic element.

14. The process as claimed in any one of the preceding claims, **characterized in that** the thickness of the embedding layer varies from d to 10 cm, where d represents the diameter of the pipes.

15. The process as claimed in any one of the preceding claims, **characterized in that** the combined thickness of the layer(s) subsequently applied to said embedding layer is less than 30 cm, advantageously less than 10 cm.

Fig. 1

Fig. 2

Fig. 3

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 202004006198 U
- WO 9934155 A
- EP 2062941 A
- US 6588974 B
- FR 2855523
- EP 1017760 A
- EP 690102 A
- FR 2945818
- FR 2965271
- EP 2062943 A
- FR 2939143
- FR 2901279
- FR 2910477
- EP 900822 A
- FR 2721043
- FR 2891838
- WO 2006070104 A
- WO 2011151387 A
- FR 3054568
- FR 2883882
- EP 1716207 A
- EP 1915420 A
- FR 2950893
- WO 2004016565 A
- EP 0384094 A
- EP 0524031 A
- EP 0781887 A
- EP 0552574 A
- FR 2732239
- EP 1668184 A
- WO 2007143016 A
- WO 2011153267 A
- WO 2006119354 A
- FR 2852018

**Littérature non-brevet citée dans la description**

- Use of Modified Bituminous Binders, Special Bitumens and Bitumens with Additives in Road Pavements. LCPC, 1999